# EUROPEAN PATENT APPLICATION

(11) **EP 2 492 815 A1**
(43) Date of publication of application: **29.08.2012**
(21) Application number: 12154858.0
(22) Date of filing: 10.02.2012
(51) Int. Cl.: G06F 11/36

(54) **A computer implemented system and method for indexing and optionally annotating use cases and generating test scenarios therefrom**

(30) Priority: 22.02.2011 IN MU04892011
(71) Applicant: Zensar Technologies Ltd, 411 014 Maharashtra (IN)
(72) Inventor: Gaikwad, Vijaykumar, Pune-411013 Maharashtra (IN); Bobde, Saurabh Manohar, 4110 40 Haharashtra (IN); Mittal, Nupur, 110070 New Delhi (IN)
(74) Representative: Harrison Goddard Foote

(57) **Abstract**

A computer implemented system and method for indexing and optionally annotating use cases and generating test scenarios therefrom have been disclosed. The system includes a pre determined structural format, according to which the steps of the use cases are organized, in the event that that the steps of the sue case do not adhere to the pre determined structural format. The system includes indexing means adapted to appropriately index the steps of the use case. The system further includes generating means which facilitates extraction of the indexed steps from the use case and also facilitates identification of at least one sequence in which said indexed steps can be traversed. The system further includes identification means adapted to generate at least one test scenario having the indexed steps arranged according to the sequence identified by said identification means.

## Description

### FIELD OF THE DISCLOSURE

The present disclosure relates to the field of software testing.

More particularly, the present disclosure relates to creating structured, indexed and annotated use cases and generating test scenarios therefrom.

### DEFINITIONS OF TERMS USED IN THIS SPECIFICATION

The term ***'main flow'*** in this specification refers to the sequence of use case steps that describe the most common way the use case executes normally (that is, successfully). The main flow contains the most preferred sequence of steps describing the interactions between the system under test and user.

The term ***'alternative flow'*** in this specification refers to the sequence of use case steps that describe the scenarios other than the ones that have been described through the main flow. The term alternative flow is used to represent an alternative sequence of steps describing the interactions between the system under test and user.

The term ***'exceptional flow'*** in this specification refers to the sequence of steps taken by the system described by the use case when abnormal conditions occur. The term exceptional flow normally represents a path that is undesirable to the user, such as an error condition or unexpected response from the system for the user's action.

### BACKGROUND

Software testing is a verification technique utilized in the software industry. Prior to testing software applications, it is necessary to identify test scenarios that accurately represent the behavioral characteristics of the software application to be tested. A test scenario is an ordered collection of test cases which dictates the order in which test cases need to be executed so as to determine whether a software application is working appropriately or not.

With the advent of technology, testing systems that automatically execute test cases without any sort of manual intervention are available, but the creation of test cases demands human involvement and supervision. Manual creation of test cases requires application of human intelligence and deep understanding of the software application to be tested. The process of manual identification of appropriate test cases is often considered to be complicated and time consuming.

Use case modeling is a process of creating relevant use cases that correspond to a particular software application. Use cases are well established means for requirements elicitation and specification and modeling the behavior of a system from user's point of view. A use case is a scenario that describes the use of a system by a user to accomplish a certain goal. The user acts on the system by providing inputs to the system. A scenario is an ordered set that describes the interaction between the system and user(s) external to the system. Therefore a use case could be termed as an ordered collection of all the actors acting upon the system and their respective interactions with the system. Use cases are used in the process of software testing because of the below mentioned advantages:
- use cases help capture the system's functional requirements from a user's perspective;
- use cases provide for the active involvement of users in the process of requirements gathering;
- use cases make it possible to identify major classes contained in a software application and also help in understanding the interrelationships between those major classes;
- use cases are used as a foundation to create test scenarios or test cases;
- since use cases are widely used as the basis for software development, utilizing use cases for the purpose of software testing provides a uniform notation and also promotes reusability of use cases; and
- since the same set of use cases are utilized for software development as well as software testing, the test cases could be developed in parallel with the development of software application thereby enabling an early validation of the user requirements;

One of the common approaches utilized to test software applications is use case model based testing approach. In case of use case model based testing approach a use case model accurately representing the actual characteristics and expected behaviors of the software application under test is created. Formal use case models created using the process of use case modeling are used as the basis to identify test scenarios.

Test scenarios are higher level abstraction of a set of functional steps that encapsulate a particular test. Test cases are a detailed variant of test scenarios and typically include test inputs, test data and expected test results. A typical test scenario typically comprises one or more test cases. A test scenario therefore acts as a means to determine the scope of coverage corresponding to test cases. In case of business critical software applications, use cases are likely to be complex and an accurate determination of a critical set of test scenarios is deemed necessary for conduction of efficient testing of the software application.

With advancements in modeling technology and with advancements available as far as the languages utilized for the purpose of creating models are concerned, attempts have been made to create systems that would analyze software requirement specifications/documents and automatically identify test related attributes including but not restricted to test criteria, test data, test case execution paths and test execution scripts, based on the structure of the requirement specifications/documents. With the availability of Unified Modeling Language (UML), the task of analyzing the structure associated with use case models has been simplified. Systems of the prior-art, which utilize the method of use case grammar based categorization, often do not succeed in identifying the relevant test scenarios because those systems use single pass lexical analysis. Moreover the systems that use single pass lexical analysis fail to perform many of the required complex optimizations thereby resulting in identifying test scenarios which do not provide an accurate representation of the concerned system's behavior.

Moreover, another disadvantage associated with using single pass lexical analysis systems to identify test scenarios is that those systems have no inbuilt structure to categorize the identified test scenarios and the lack of categorization of test scenarios is a major issue when numerous use cases are created in correspondence to a particular software application. The process of automatic identification of test scenarios based on the use case documentation is further complicated by the fact that use cases are documented using different formats such as Unified Modeling Language (UML) and Systems Modeling Language (SysML).

Some of the prior art systems for generating test cases are discussed below:
United States Patent Application No.20060214948 filed by Siemens Corporation teaches a system and method for generating test frames in specification based testing by using a path coverage criterion. The method envisaged by the above mentioned US Patent Application includes receiving a test design as input and constructing a context free grammar graph based on the test design. The method further includes analyzing the context free grammar graph to generate a first set of paths and emitting a set of test frames as output based on the first set of paths. The aforementioned patent application envisages a system that accepts an ECFG (extended context free grammar) model based test design as an input to generate all possible test frames. The method advantageously reduces frequent back tracking with repeated random number generator overheads while systematically traversing a context free grammar graph of a test design.
United States Patent No.6378088 granted to John Thomas Mongan teaches a test generator that generates tests by randomly traversing description of the interface of a program being tested, thereby generating tests that contain randomly selected actions and randomly selected data. During the phase of execution, the tests generated in accordance with the above mentioned US Patent manipulate the program being tested. The generated tests take the form of test scripts written in the language of a commercially available testing tool and include programming statements that invoke one or more functions of the application program being tested.
United States Patent No.6671874 granted to Sofia Passova teaches a method of developing a model of a computer program which represents the system requirement conditions and events as a set of positions and transitions, and maps the system requirements in a table as positions and optionally as transition designations. The method in accordance with the aforementioned US Patent models the system requirements, design requirements and program code for a computer program.
United States Patent No.6976246 granted to Microsoft Corporation teaches a finite state model based testing system that has a user interface which enables a user to enter state information and transition information about a software application to be tested. The user interface further enables the user to initiate a model generation engine to generate a model of the software application based on the state information and transition information. The testing system further includes a graph traversal menu that enables the user to select a graph traversal program for the purpose of generating a test sequence of inputs for the software application. The testing system further includes a test execution menu that enables the user to select a test driver program which reads the test sequence of inputs for the software application and executes the test sequence of inputs on the software application.
None of the Patent Documents mentioned above have addressed the issue of automatically generating indexed test scenarios which are unambiguous. Moreover none of the above mentioned Patent Documents address the issue of parsing use case documents that are created using different formats such as UML and SysML. Therefore there is felt a need for a system that can appropriately index the use case documents and identify relevant test scenarios based on the indexed use case documents.

### OBJECTS

Some of the non limiting objects of the present invention include the following:
An object of the present invention is to introduce consistency and reliability to the process of identifying test scenarios.
Yet another object of the present invention is to provide a system that will automatically create structured and indexed use cases.
One more object of the present invention is to provide a system which makes use of indexing methodology to create structured use cases.

Yet another object of the present invention is to provide a system that would meaningfully organize the steps included in a use case in order to establish a semantic correlation between the steps of the use case.

Still a further object of the present invention is to provide a system that offers flexibility in terms of uniquely numbering the steps contained in a use case document.

Another object of the present invention is to provide a system that enhances the clarity and reduces the ambiguity of input use cases.

Yet another object of the present invention is to provide a system that adds appropriate keywords at appropriate steps of the use case document to provide better understandability and clarity to the user.

Another object of the present invention is to automatically identify test scenarios based on the structured and indexed use case documents.

Yet another object of the present invention is to provide a system which efficiently recognizes relevant test scenarios within a shorter span of time.

One more object of the present invention is to provide a system that identifies test scenarios directly from use case documentation thereby avoiding the creation of a test model.

Still further object of the present invention is to provide a system that identifies test scenarios by parsing use case documents that are created in different formats such as Unified Modeling Language (UML), and Systems Modeling Language (SysML).

Yet another object of the present invention is to provide a system that can be easily integrated with the existing software development systems and software testing systems.

Another object of the present invention is to provide a system that reuses the artifacts from the earlier phases of software development process in the process of testing, thereby taking advantage of the synergy between the closely related phases of software development and software testing.

Other objects and advantages of the present invention will be more apparent from the following description when read in conjunction with the accompanying figures, which are not intended to limit the scope of the present invention.

### SUMMARY OF THE INVENTION

The present invention envisages a computer implemented system for indexing and optionally annotating steps associated with use cases and generating test scenarios therefrom. The system, in accordance with the present invention comprises a pre-determined structural format.

Typically, in accordance with the present invention, the system includes editing means adapted to re-arrange the steps associated with the use cases according to the pre-determined structural format only in the event that the steps do not adhere to the pre-determined structural format.

Typically, in accordance with the present invention, the system further includes indexing means adapted to index the steps that adhere to the pre-determined structural format and the steps re-arranged according to the pre-determined format.

Typically, in accordance with the present invention, the system further includes annotating means adapted to optionally annotate at least one of the indexed steps in each of the use cases by inserting appropriate keywords into at least one of the indexed steps.

Typically, in accordance with the present invention, the system includes generating means adapted to receive use cases having indexed steps. The generating means, in accordance with the present invention includes extraction means adapted to extract the indexed steps from the use cases.

Typically, in accordance with the present invention, the generating means includes identification means adapted to identify at least one sequence in which the indexed steps can be traversed, wherein the sequence includes at least one flow selected from the group of flows consisting of main flow, alternative flow and exceptional flow.

Typically, in accordance with the present invention, the generating means includes means adapted to generate at least one test scenario having the indexed steps arranged according to the sequence identified by the identification means, the means further adapted to optionally filter generated test scenarios based on a pre-determined filtering criterion.

Typically, in accordance with the present invention, the generating means includes comparator means adapted to compare generated test scenarios based on the sequence of the corresponding indexed steps, said comparator means further adapted to eliminate the test scenario having a sequence identical to that of another generated test scenario.

Typically, in accordance with the present invention, the system further includes exporting means adapted to export at least the generated test scenarios onto a test environment.

The present invention envisages a computer implemented method for indexing and optionally annotating steps associated with use cases and generating test scenarios therefrom. The method, in accordance with the present invention comprises the step of re-arranging the steps associated with the use cases according to a pre-determined structural format only in the event that the steps do not adhere to the pre-determined structural format.

Typically, in accordance with the present invention, the method further includes the step of indexing the steps that adhere to the pre-determined structural format and the steps re-arranged according to said pre-determined format.

Typically, in accordance with the present invention, the method further includes the step of optionally annotating at least one of the indexed steps in each of the use cases by inserting appropriate keywords into at least one of the indexed steps.

Typically, in accordance with the present invention, the method further includes the step of receiving the use cases having indexed and annotated steps and extracting said indexed and annotated steps from said use cases.

Typically, in accordance with the present invention, the method further includes the step of identifying at least one sequence in which the indexed steps can be traversed.

Typically, in accordance with the present invention, the method further includes the step of generating at least one test scenario having the indexed steps arranged according to identified sequence.

Typically, in accordance with the present invention, the method further includes the step of optionally filtering generated use cases based on a pre-determined filtering criterion.

Typically, in accordance with the present invention, the method further includes the step of comparing generated test scenarios based on the sequence of corresponding indexed steps and eliminating the test scenario having a sequence identical to that of another generated test scenario

Typically, in accordance with the present invention, the step of identifying at least one sequence further includes the step of identifying a sequence having at least one flow selected from the group of flows consisting of main flow, alternative flow and exceptional flow.

Typically, in accordance with the present invention, the method further includes the step of exporting at least the generated test scenarios including filtered test scenarios in to a test environment.

### BRIEF DESCRIPTION OF THE ACCOMPANYING DRAWINGS

The invention will now be described with reference to the accompanying drawings, in which:
**FIGURE 1** illustrates a schematic of the computer implemented system for creating indexed, annotated use cases and generating test scenarios therefrom; and
**FIGURE 2** and **FIGURE 3** illustrate a flowchart for the computer implemented method for creating indexed, annotated use cases and generating test scenarios therefrom.

### DETAILED DESCRIPTION

The block diagrams and the description thereto are merely illustrative and only exemplify the computer implemented system and method for indexing and optionally annotating steps associated with use cases and generating test scenarios therefrom, envisaged by the present invention and in no way limit the scope thereof.

To overcome the difficulties associated with creating indexed and annotated use cases and generating relevant test scenarios therefrom, the present invention provides a system that indexes and optionally annotates use cases and facilitates generation of test scenarios therefrom. The system in accordance with the present invention appropriately establishes semantically correlated indexes for the steps associated with the use case in order to provide more clarity and understandability to the use case. The system optionally inserts appropriate keywords including but not restricted to break, continue and stop at appropriate junctures of the use case in order to introduce better clarity to the use case. Indexing the processing steps contained in the use case and inserting appropriate keywords including but not restricted to break, continue, start and stop at appropriate junctures in the steps associated with the use case makes the use case more intuitive and understandable.

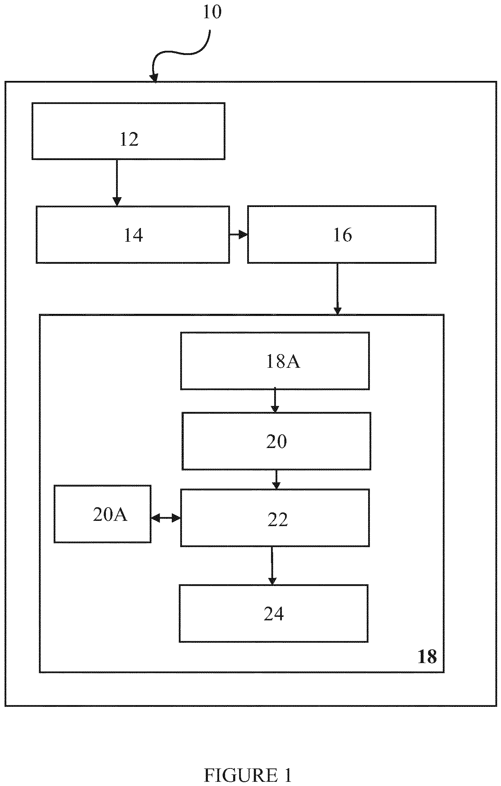

Referring to the accompanying drawings, **FIGURE 1** illustrates a block diagram of the system **10** for indexing and optionally annotating use cases and generating test scenarios therefrom. The system **10** acts as a framework for creating indexed and optionally annotated use cases and identifying appropriate test scenarios there from. The system **10** in accordance with the present invention includes a use case creation means (not shown in the figures) which makes use of well known techniques and functional requirements specified by the user to create use case models. Alternatively, the use case model can also be created by the user himself/herself depending upon the specified functional requirements.

In accordance with the present invention, the created use case model describes the complete functionality of a software application under consideration by identifying how everything that is outside the software application interacts with it. The use case model contains one or more use cases representing the individual interactions between the software application under consideration and the users of the software application. Typically, the procedure for creating a basic use case involves identifying all the users using the software application under consideration. During the process of creation of the use case all the users are identified and the roles played by the identified users are appropriately documented.

The step of identification of users and determination of the roles played by the users is followed by the step of determination of events that occur in the software application under consideration. The occurrence of events is dependent on the functionalities offered by the software application. The step of identification of events corresponding to the software application is followed by the step of determination of inputs, results and outputs corresponding to the software application. The step of determination of inputs, outputs and results corresponding to the software application is normally followed by the step of determining the main flow, alternative flow and exception flow corresponding to the software application under consideration.

The main flow, also termed as the basic flow of a use case describes a single path through the software application under consideration. It represents the most common way that the use case plays out successfully and contains the most popular sequence of user-software application interactions. Other scenarios or paths corresponding to the software application are described in alternative flows and exception flows.

An alternative flow describes a scenario other than the main flow that results in a user completing his or her goal. It is often considered to be an optional flow and implies that the user has chosen to take an alternative path through the system. An exception flow is an unintended path through the software application usually as a result of missing information or application errors. Exception flows represent an undesirable path to the user. However, even though the exception flow has occurred, the software application will ideally react in a way that recovers the flow and provide some useful information to the user. One of the major benefits of utilizing exception flows in a use case document is the focus that exception flows bring to error conditions. By capturing all of the ways that the software application can fail or produce an error, ways of mitigating the effects of the occurrence of application errors can be identified and worked upon and also the possibility of occurrence of application errors can be minimized.

The system **10**, in accordance with the present invention includes editing means denoted by the reference numeral **12** which receives the use case model from the use case creation means. A use case model comprises at least one use case. The editing means **12** processes the use cases contained in the use case model to determine whether the steps associated with each of the use cases adhere to a pre-determined structural format. The editing means **12** in accordance with the present invention retrieves one use case at a time from the use case model and checks the steps associated with the use case in order to determine whether the steps associated with the use case adhere to a pre-determined structural format.

In accordance with the present invention, a structured use case will have all the possible main flows, alternative flows and exceptional flows listed in a sequential order, i.e. all the possible main flows are listed first, followed by the alternative flows which are typically grouped based on the main flow to which they correspond. The listing of alternative flows is followed by the listing of exceptional flows which are also typically grouped based on the main flows and/or alternate flows to which they correspond. However, it is possible that a use case might contain much complicated combination of flows, for example, an alternative flow might have a plurality of corresponding alternative flows or an alternative flow could have a plurality of corresponding exceptional flows. However, for the sake of brevity such examples have not been considered herein. However, the system **10** of the present invention is adapted to index and optionally annotate use cases, and generate test scenarios therefrom, irrespective of their underlying complexity.

In accordance with the present invention, if the use case is found not to adhere to the pre-determined structural format, the editing means **12** re-arranges the steps associated with such a use case in order to establish a semantic correlation between the steps of the use case, only in the event that the steps of the use case do not adhere to the pre-determined structural format. By rearranging the steps associated with the use case, the editing means **12** provides the use case with a proper and meaningful, yet non-indexed structure. When the steps of the use case are re-arranged by the editing means **12**, the use case model containing the use case is subsequently updated to reflect the changes that are performed on the use case. During the phase of re-arranging the steps of the use case, the steps associated with main flow(s) of the use case are firstly arranged according to a pre-determined structural format. Subsequently, the steps associated with alternate flow(s) are organized as per the pre-determined structural format and are grouped so as to correspond to the relevant main flow in the use case. Additionally, the steps associated with the exception flows are arranged as per the pre-determined structural formant and grouped with the corresponding main flow or the alternative flow so that the entire use case obtains a uniform structure and a well defined format.

In accordance with the present invention, the use case whose main flow steps, alternative flow steps and exceptional flow steps have now been organized according to the pre-determined structural format is forwarded to the indexing means. It is possible that none of the steps of a use case adhere to the pre-determined structural format or all the steps of the use case adhere to the pre-determined structural format or only few of the steps of the use case adhere to the pre-determined structural format. In the event that none of the steps of the use case adhere to the pre-determined structural format, all the steps would be re-arranged according to the pre-determined structural format by the editing means **12**. In the event that all the steps of the use case adhere to the pre-determined format, the steps of the use case will directly be transmitted to the indexing means **14**. In the event that only few of the steps of the use case document do not adhere to the pre-determined structural format, such steps would be re-arranged and uniformly merged with the steps that adhere to the pre-determined structural format so as to provide uniformity and clarity to the use case.

The indexing means **14** in accordance with the present invention is adapted to appropriately index the steps associated with the received use case. However, it is within the scope of the present invention to index the steps associated with the main flow, alternative flow and exceptional flow of the use case at the time of creating those use case steps, The indexing means **14** uses a structure denoted as (p, c) wherein 'p' is the parent-index number. The parent index number 'p' represents the step number of the main flow with which the alternative flow is associated. 'c.x' represents the child index number wherein 'c' represents the number corresponding to the alternate flow and 'x' represents the corresponding step of the alternative flow, i.e., if p=2;c=1.1 and x=a then 'c=1' denotes the first alternative flow; 'p=2' denotes that the alternative flow corresponds to the second step of main flow; and 'x=a' denotes the first step of first alternative flow and the range [a.....z] is utilized to denote the subsequent steps in the alternative flow. Therefore, if a use case step is indexed by indexing means **14** as '2.1.a' then it denotes that the step having such an index is the 'first' step (x=a) of the 'first' alternative flow (c=1) corresponding to the second step of main flow (p=2). However, the variable 'x' need not be used in cases where the alternative flow has only one step. For example, in case of an alternative flow having only one step the notation '2.1' and '2.1.a' may be deemed equivalent. The steps associated with the main flow, alternative flow and exceptional flow of the use case can be indexed at the stage of creating the use case. The steps of the use case indexed according to the aforementioned phenomenon by the indexing means **14** are optionally transmitted to the annotating means **16** which is adapted to annotate at least one of the indexed steps of each of the use cases. The annotation means **16** is adapted to annotate the indexed steps by inserting appropriate keywords including but not restricted to 'break', 'goto', 'continue', 'stop' and 'start' at appropriate indexed steps in the use case to provide more clarity and understandability to the use case.

In accordance with the present invention, the use cases contained in a use case model are sequentially retrieved and appropriately indexed and optionally annotated in order to provide them with a well defined structure. The indexed and annotated use case thus created is further passed on to generation means **18** which includes extraction means denoted by the reference numeral **18A** which is adapted to extract the indexed and annotated steps from the use case received by the generation means **18**. It is to be noted that all the steps of the use case will be indexed by the indexing means **14** whereas only appropriate indexed steps would be optionally annotated by the annotating means **16**. Therefore, it is to be understood that every indexed step might not have a corresponding annotation. The indexed steps extracted by the extraction means **18A** are transmitted to identification means denoted by the reference numeral **20** which is adapted to identify at least one sequence in which the indexed steps of the use case could be traversed.

The sequence identified by the identification means **20** includes at least one flow selected from the group of flows consisting of main flow, alternative flow and exception flow. When the indexed steps of the use case are accessed by the identification means **20,** the identification means **20** typically determines the starting point for the traversal path. The traversal typically begins at the start point defined by the use case. Normally, the sequence of traversal is initiated with the traversal of the indexed steps corresponding to the main flow of the use case. Firstly the indexed steps corresponding to the main flow of the use case will be traversed. Subsequent traversals of the use case are based on the presence of the corresponding alternative flow steps and exceptional flow steps. If the use case includes any alternative flows corresponding to the main flow, then subsequent to the traversal of the steps of the main flow, the steps corresponding to the alternative flow will be traversed. Subsequently, if it is determined by the identification means **20** that exceptional flows corresponding to one or more steps of the main flow are included in the use case then, the step(s) corresponding to the exceptional flows would be traversed. The identification means **20** is adapted to optionally identify the values for each data variable included in the use case. The data variables utilized along a particular traversal sequence are also derived from the use case.

In accordance with the present invention, the sequence of traversal identified by the identification means **20** include but is not restricted to:
1. Basic-Main Path scenario: in this scenario, the sequence identified by the identification means **20** includes only a main flow and no alternative flows and exceptional flows are present.
2. Basic-Exception Path scenario: in this scenario, the sequence identified by the identification means **20** includes at least one main flow followed by the corresponding exceptional flows.
3. Alternate Path Scenario: in this scenario, the sequence identified by the identification means **20** includes at least a first main flow followed by alternative flows corresponding to the first main flow, followed by a second main flow.
4. Alternate with Exception Path scenario: in this scenario, the sequence identified by the identification means **20** includes a first main flow followed by corresponding alternative flows further followed by the corresponding exceptional flows.

The identification means **20** in accordance with the present invention cooperates with means **22** which is adapted to generate at least one test scenario having the indexed steps arranged according to the sequence identified by the identification means **20**. The means **22** is further adapted to optionally filter the generated test scenarios based on pre-determined filtering criteria. The means **22** filters the generated test scenarios based on pre-determined filtering criteria which include but are not restricted to adequacy of the data utilized in the use case, the flow of information, coverage of interaction between the user and the application to be tested and keywords specified. i.e., for example if a sequence includes a main flow and two corresponding alternative flows, and if the keyword 'break' is specified as the filtering criterion, then the sequence gets updated by the means **22** and is represented as 'main flow' followed by the 'alternative flow' followed by the keyword 'end' denoting the fact that the sequence ends with the alternative flow.

In accordance with the present invention, the means **22** further includes comparator means **22A** which is adapted to identify and eliminate duplicate test scenarios from the set of generated test scenarios. For example, if a first test scenario has main flows and exceptional flows similar to a second test scenario with the only distinction being that the second test scenario has a set of alternative flows along with the main flow and the exceptional flow, in the event that the alternative flow is completely deleted from the second test scenario then both the first and second test scenario would have a similar flow structure. In case of occurrence such an event, in case of deletion of alternative flows from the second test scenario, the means **22** identifies that the two test scenarios, i.e., the first test scenario and the second test scenario have exactly similar flow structure and subsequently filters out the second test scenario.

The system **10** in accordance with the present invention further includes exporting means denoted by the reference numeral **24**which exports the generated test scenarios including the filtered test scenarios to a test management environment. The test management environment can include a computer connected to a network wherein the process of creating a test suite and managing the testing cycle (process) of software applications is undertaken. The test management environment can also include a computer located in a remote location to which the exporting means **24**can be plugged in order to facilitate transfer of relevant test scenarios. Alternatively, the exporting means **24**can also export the generated test scenarios wherein they can be stored for further utilization. Typically, the generated test scenarios are exported in formats including MS Excel or text format by the exporting means **24**

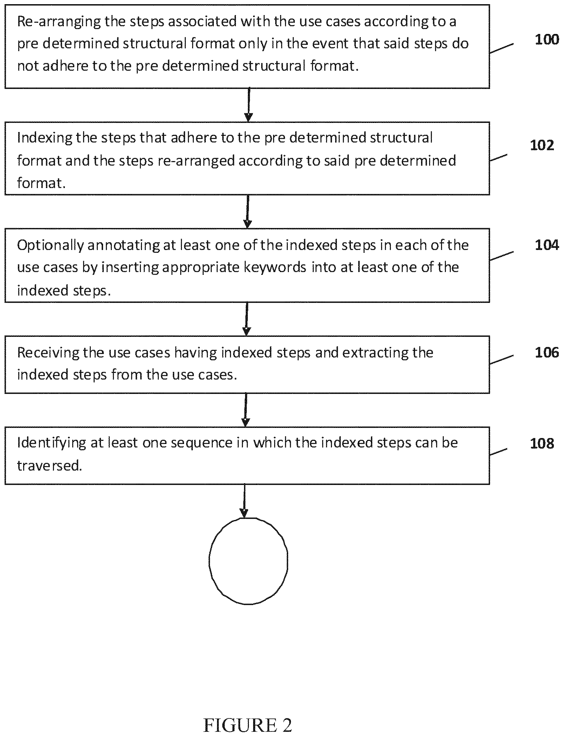

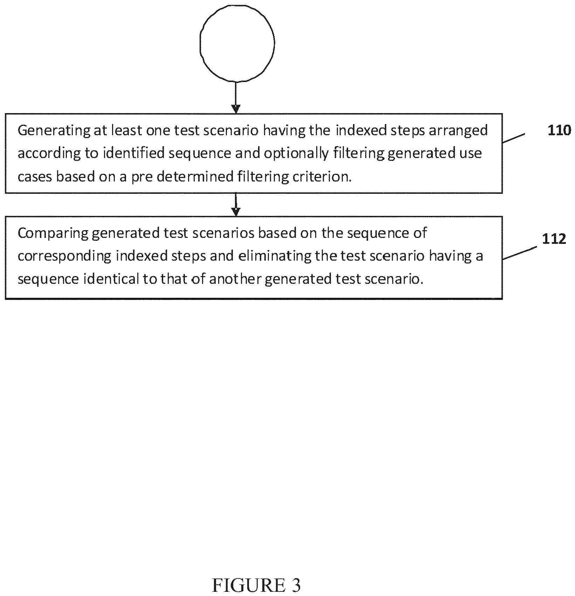

Referring to **FIGURE 2** and **FIGURE 3**, there is illustrated a method for creating indexed and optionally annotated use cases, processing the indexed and optionally annotated use cases and recognizing relevant test scenarios. The method envisaged by the present invention includes the following steps:
- re-arranging the steps associated with said use cases according to a pre-determined structural format only in the event that said steps do not adhere to said pre-determined structural format **100**;
- indexing the steps that adhere to said pre-determined structural format and the steps re-arranged according to said pre-determined format **102**;
- optionally annotating the indexed steps in each of said use cases by inserting appropriate keywords into at least one of the said indexed steps **104**;
- receiving the use cases having indexed steps and extracting said indexed steps from said use cases **106**;
- identifying at least one sequence in which said indexed steps can be traversed **108**;
- generating at least one test scenario having said indexed steps arranged according to identified sequence and optionally filtering generated use cases based on a pre-determined filtering criterion **110**; and
- comparing generated test scenarios based on the sequence of corresponding indexed steps and eliminating the test scenario having a sequence identical to that of another generated test scenario **112**.

In accordance with the present invention, the step of identifying at least one sequence further includes the step of identifying a sequence having at least one flow selected from the group of flows consisting of main flow, alternative flow and exceptional flow.

In accordance with the present invention, the method further includes the step of exporting at least the generated test scenarios including filtered test scenarios into a test environment.

In accordance with an exemplary embodiment of the present invention, there is shown a use case pertaining to the process of "cash withdrawal" by a customer from the "ATM of a bank". In a software development life cycle, the below mentioned use case is also used for the purpose of testing the software application underlying the "cash withdrawal" operation of an automatic teller machine (ATM). **Table 1.1** given below exemplifies the use case document. However, it is to be understood that other fields for each use case may be included without departing from the scope of the invention. Typically, the procedure for creating a basic use case involves identifying all the actors who act on the software application under consideration. The word 'actor' is used to depict the role played by the user who interacts with the software application under consideration. During the process of creation of the use case, all the actors/users are uniquely identified and appropriately documented. The step of determination of actors is followed by the step of determination of events that occur across the system of the application under consideration. The occurrence of events is dependent on the functionalities of the software application or system. The step of identification of events corresponding to the software application is followed by the step of determination of inputs, results and outputs corresponding to the software application. The step of determination of inputs, outputs and results corresponding to the software application is normally followed by the step of determining the main flow, alternate flow and exception flow corresponding to the software application under consideration.

**Table 1.1: Use case describing the process of cash withdrawal from an ATM machine**

| **Actors** | |
|---|---|
| | |
| Bank Customer | |
| Bank | |

| **Preconditions** | |
|---|---|
| | |
| The automatic teller machine of the bank must be connected through a network. | |
| The automatic teller machine must have dispensable cash. | |

| **Main Flow** | |
|---|---|
| The use case begins when Bank Customer inserts their Bank Card. | |
| | |
| Customer enters his credentials when prompted by the ATM | |
| Use Case named "Validate User" (not shown) is executed. | |
| The ATM displays the different alternatives that are available on this unit. | |
| The ATM prompts for an account. | |
| The Bank Customer selects an account. | |
| The ATM prompts for an amount. | |
| The Bank Customer enters an amount. | |
| Card ID, PIN, amount and account is sent to Bank as a transaction. The Bank Consortium replies with a go/no go reply telling if the transaction is ok. Then money is dispensed. | |
| The Bank Card is returned. | |
| The receipt is printed. | |
| The use case ends successfully. | |

| **Alternative Flows** | |
|---|---|
| • **Amount Exceeds Withdrawal Limit** | |
| If in the eighth step "**Bank Customer enters an amount**" in the main flow, the Bank Customer enters an amount that exceeds the withdrawal limit, then the ATM displays a warning message, and asks the Bank Customer to re-enter the amount. The use case resumes execution at **step 8** of **main flow.** | |

| • **Invalid User** | |
|---|---|
| If in **third step** of the **main flow**, if the use case named "**Validate User**" does not successfully execute, an exception will be raised and an error log will be created by ATM. If this is the last permissible attempt (for example, third attempt), then exception flow "Lock User" will be executed, Else, the use case resumes execution at **step 2** of **main flow.** | |

| • **Invalid account** | |
|---|---|
| If in **step 9** of the **main flow** the account selected by the Bank Customer is not associated with the inserted bank card, then the ATM shall display the message "Invalid Account-please try again". The use case resumes execution at **step 5** of main flow. | |

| • **ATM Out of cash** | |
|---|---|
| If in **step 9** of the **main flow**, the ATM machine is out of cash to dispense, the use case | |
| ends with a failure condition, an exception will be raised and an error log will be created by the ATM. The use case resumes at **step 10** of the main flow. | |

| **Exceptional Flow** | |
|---|---|
| • **Lock User** | |
| If in **alternate flow "Invalid User", the user has exceeded the allowed number of attempts**, an error log will be created by the ATM, and the card will not be returned. The use case resumes at **step 11** of the main flow. | |

| • **Printer Fault** | |
|---|---|
| If in **step 11** of the **main flow**, the ATM machine is out of paper or the receipt printer fails for any reason, the use case ends with a failure condition, an exception will be raised and an error log will be created by the ATM. | |

The use case provided in **Table 1.1** is structured but non-indexed. The above mentioned use case in spite of having a structure lacks proper indexing and annotations. In a traditional context (approach/environment), the use case is created using the commonly available document editing tools such as Microsoft Word, while in some other cases a more formalized, UML-based use case modeling may be used. However, use cases in such a manner need to be processed by the human expert to derive and identify the test design corresponding to it.

The system envisaged by the present invention receives the use case model and processes the use cases contained in the use case model to determine whether the use cases are in a structured format or an unstructured format and also allows the user to edit the use case, if needed. The system further includes editing means adapted to organize the steps of the use case in accordance with the pre-determined structural format comprising main flows, alternate flows and exception flows. Additionally, the use cases in this structured form are indexed using an indexing means of the system. **Table 1.2** given below exemplifies the use case after it has been formatted according to the pre-determined structural format and indexed to establish the semantic correlation between the steps of the use case.

**Table 1.2: Use case after indexing describing the process of cash withdrawal from an ATM machine**

| **Actors** | |
|---|---|
| Bank Customer | |
| Bank | |

| **Preconditions** | |
|---|---|
| The automatic teller machine of the bank must be connected through a network. | |
| The automatic teller machine must have dispensable cash. | |

| **Main Flow** | |
|---|---|
| 1. | The use case begins when Bank Customer inserts their Bank Card. |
| 2. | Customer enters his credentials when prompted by the ATM |
| 3. | Use Case named "Validate User" (not shown) is executed. |
| 4. | The ATM displays the different alternatives that are available on this unit. |
| 5. | The ATM prompts for an account. |
| 6. | The Bank Customer selects an account. |
| 7. | The ATM prompts for an amount. |
| 8. | The Bank Customer enters an amount. |
| 9. | Card ID, PIN, amount and account is sent to Bank as a transaction. The Bank Consortium replies with a go/no go reply telling if the transaction is ok. Then money is dispensed. |
| 10. | The Bank Card is returned. |
| 11. | The receipt is printed. |
| The use case ends successfully | |

| **Alternative Flows** | |
|---|---|
| • **3.1 Invalid User** | |
| [If in **step 3** of the **main flow**,] if the use case named "Validate User" does not successfully execute, an exception will be raised and an error log will be created by ATM. If this is the last permissible attempt (For Example, third attempt), then exception flow "Lock User" will be executed, | |
| **STOP** | |
| Else, the use case resumes execution at **step 2** of main flow. | |

| • **8.1 Amount Exceeds Withdrawal Limit** | |
|---|---|
| [If in the step 8:"Bank Customer enters an amount" in the main flow], the Bank Customer | |
| enters an amount that exceeds the withdrawal limit, then the ATM displays a warning message, and asks the Bank Customer to re-enter the amount. The use case resumes execution at **step 8** of main flow. | |
| • **9.1 Invalid account** | |
| If [in **step 9** of the **main flow**] the account selected by the Bank Customer is not associated with the inserted bank card, then the ATM shall display the message "Invalid Account - please try again". The use case resumes execution at **step 5** of main flow. | |
| • **9.2 ATM Out of cash** | |
| If [in **step 9** of the **main flow**,] the ATM machine is out of cash to dispense, the use case ends with a failure condition, an exception will be raised and an error log will be created by the ATM. The use case resumes execution at **step 10** of main flow. | |
| **Exceptional Flow** | |
| • **3.1 Lock User** | |
| If in **alternate flow "Invalid User", the user has exceeded the allowed number of attempts,** an error log will be created by the ATM, and the card will not be returned. The use case resumes at **step 10** of the main flow. | |
| • **11.1 Printer Fault** | |
| If in **step 11** of the **main flow**, the ATM machine is out of paper or the receipt printer fails for any reason, the use case ends with a failure condition, an exception will be raised and an error log will be created by the ATM. **STOP** | |

**Table 1.2** illustrates a structured and indexed use case. The indexed use case illustrated in **Table 1.2** clearly describes various aspects of the use case document such as the main flow, alternate flow and exception flow amongst others. Moreover, the use case shown in **Table 1.2** also consists of appropriately indexed items which bring clarity and understandability to the use case. As shown in **table 1.2**, various process steps depicted in the use case have been appropriately indexed using a number series by the indexing means **14**, and the use case has been edited by the editing means **12** in accordance with the pre-determined structural format comprising main flow, alternate flows and exceptional flows, in order to enhance the readability and clarity of the use case. Further, certain steps in the use case flows have been annotated by keywords like "STOP" to enhance the clarity of the requirements for the expected system's behavior. Such behavior is the subject of the test design that aims to ensure correctness under the stated conditions and scenarios.

In accordance with the present invention, the indexed and optionally annotated use case, as exemplified in **Table 1.2** is provided as input to the identification means **20**. The identification means **20** is adapted to identify the set of all possible sequence of traversals corresponding to the indexed and annotated use cases. The sequence identified by the identification means **20** includes at least one main flow, corresponding alternative flow(s) and corresponding exceptional flow(s). However, it is possible in some cases that the exceptional cases may not be present.

The identification means **20** begins traversing the use case typically from the start point defined by the use case. Normally, the sequence of traversal is initiated with the traversal of the indexed steps corresponding to the main flow of the use case, and as per **Table 1.2**, the traversal of the use case begins with the traversal of **Main Flow** which begins with the step of bank customer inserting his/her card. Subsequently, all the steps included in the main flow will be traversed by the identification means **20**. Subsequent traversals of the use case are based on the presence of the corresponding alternative flow steps and exceptional flow steps. If the use case includes any alternative flows corresponding to the main flow, then subsequent to the traversal of the steps of the main flow, the steps corresponding to the alternative flow will be traversed. In case of **Table 1.2**, the described use case includes four **alternative flows** indexed as 3.1, 8.1, 9.1 and 9.2 respectively. Therefore, subsequent to the traversal of the main flow, the aforementioned alternative flows would be traversed along with the steps of the main flow to arrive at a candidate test scenario comprising the main flow and the corresponding alternative flows.

For example, a use case with main flow and alternative flows could be traversed in such a manner that the corresponding candidate test scenario includes the following sets of steps:
Set 1: {1,2,3,4,5,6,7,8,9,10,11-END}, wherein steps 1,2, 3 ... 11 correspond to the steps in the main flow (this sequence represents the normal flow); and {1,2,3.1-STOP}, wherein
steps 1 and 2 correspond to the steps in the main flow and step 3.1 corresponds to the alternative flow (this sequence represents the combination of normal flow and corresponding alternative flow).

For example, another candidate test scenario could include the following set of steps:
Set 2: {1,2,3,4,5,6,7,8,9,10,11-END}, wherein steps 1,2, 3..11 correspond to the steps in the main flow; and {1,2,3,4,5,6,7,8.1. -STOP}, wherein steps 1,2,3,4,5,6 and 7 correspond to the steps in the main flow and step 8.1 corresponds to the alternative flow;

In accordance with this invention, set 1 and set 2 correspond to the possible candidate test scenarios generated by traversing the main flow and corresponding alternative flows. It is to be noted that for the sake of explanation only two sets of identified test scenarios are illustrated here. However, for the aforementioned exemplary use case, the number of test scenarios that can be identified will be up to 24, and all the possible test scenarios have not been explained for the sake of brevity.

Subsequent to the traversal of the main flow and alternative flows, if it is determined by the identification means **20** that exceptional flows corresponding to one or more steps of the main flow are included in the use case, then the step(s) corresponding to the exceptional flows would be traversed. In case of the use case depicted in **Table 1.2** two exceptional flows indexed as **3.1** and **11.1** have been provided. Therefore, the steps of the exceptional flows would be traversed by the identification means **20** subsequent to the traversal of the main flow and the alternative flows.

In case of **Table 1.2** , for example, the steps of the alternative flow corresponding to the 9^{th} step of the main flow are identified as alternative flow 9.1 and 9.2 such an identification of the alternative steps corresponding to a particular main step is performed by the identification means **20** based on the index associated with the steps of the alternative flow.

In accordance with the present invention, since steps of alternative flows 9.1 and 9.2 have been indexed beginning with the numerical '9' (in the format 9.x.x), the identification means **20** identifies that these steps correspond to the 9^{th} step of the main flow. Subsequently, the steps identified by the identification means **20** will be arranged in terms of a sequence (sequence involving a particular step of the main flow , all the steps of the alternative flows which have identified as related to the particular steps of the main flow) so as to represent a meaningful flow.

Further to traversing the indexed and optionally annotated use case and determining the main flow, alternative flows and exceptional flows associated with the indexed and annotated use case, the identification means **20** identifies all the possible sequences in which the steps associated with the aforementioned flows can be executed. The means **22** which is adapted to generate test scenarios having indexed and optionally annotated steps cooperates with identification means **20** and generates test scenarios having indexed steps arranged according to the sequence identified by the identification means **20**. The means **22** acts as a consistent and reliable means for identifying and generating the possible test scenarios from the use case. The test scenarios thus identified are available to the test designer/analyst to proceed with the next stage of test designing, and may be exported into a convenient format such as Microsoft Excel spreadsheet.

In accordance with another exemplary embodiment of the present invention, a use case corresponding to the process of "Viewing an online shopping cart" by a signed-in user, at an online shopping/e-commerce site for a retailer is shown. In a software development life cycle, the below mentioned use case is also used for the purpose of validating the software web application underlying the "online shopping and buying" operation of items such as books, music CDs and the like. The example below relates to the online purchase of software items. **Table 2.1** given below exemplifies the use case document.

**Table 2.1: Use case describing the 'View Cart' functionality in an online shopping application**

| **Actors** | |
|---|---|
| Online Shopper (Customer) | |
| Online Shopping web application (i.e. the system) | |

| **Preconditions** | |
|---|---|
| The shopper is authorized and logged-in to the system | |
| The shopper has selected available items/products from the listing (catalogue) and added | |
| these items to the shopping cart/basket and before proceeding to checkout, clicks the 'View Cart' menu option to review selected items. Some items may be available for "Try before Buy" i.e. trial or evaluation items, which may be priced at zero units of currency. | |
| A user may choose a combination of trial and non-trial (for example, paid) items. | |
| Main Flow | |
| **1**. The View Cart screen is displayed in the user's browser window, populated based on the selection of feature details. | |
| The Fields are: | |
| a. | Feature Name |
| b. | Subscription Type |
| c. | Unit Period |
| d. | Quantity (No. of Copies) |
| e. | Price |
| **2**. If all trial feature details are selected (Total Cost = 0) then Checkout button will appear. Else if (Total Cost > 0) Proceed to Checkout button will appear. | |
| **3**. The screen will provide the following options to the user for the selected items in the cart: | |
| a. | update the quantity (quantity > 0) |
| b. | remove an item from the cart |
| **4**. The user reviews the list of selected items in the shopping cart. | |
| **5**. If satisfied, the user clicks on the 'Checkout' or 'Proceed to Checkout' button to process to checkout. Else, the user may update an item, remove an item or return to select more items (Note: see alternate flows below for details) | |
| **6**. The System generates the subscription key. | |

| ***Explanatory note:*** | |
|---|---|
| A subscription key is a key to unlock certain items for use by the shopper, and is generated by the system, once all parts of the purchasing transaction are validated and authorized. | |
| **7**. If checkout for trial items is successfully complete, system displays a confirmation message ("Thank you for your subscription... "). | |
| The use case ends successfully. | |
| **8.** If checkout includes all paid, or a mix of trial and paid items, system displays a message ("You are being re-directed to the payment gateway to complete the payment for your transaction... "). The use case continues at the "Proceed to Payment" use case (not shown herein) | |

| **Alternative Flows:** | |
|---|---|
| Alternate Flow A: Updating Particular subscription item | |
| A.1.1 The user selects the new quantity corresponding to the subscription item. | |
| A.1.2 The user clicks on Update button then the System saves the new quantity corresponding to item in the subscription cart. | |
| A.1.3 The updated details appear on the View Cart screen. | |
| A.1.4 The System re-calculates the total cost. | |
| A.1.5 The use case resumes from step 5. | |
| Alternate Flow B : *Removing the particular subscription item* | |
| B.1.1 The user clicks on the Remove button corresponding the subscription item | |
| B.1.2 The system removes the subscription item from the user's cart. | |
| B.1.3 Removed item is no longer displayed on the View Cart screen. | |
| B.1.4 The System re-calculates the total cost. | |
| B.1.5 The use case resumes from step 5. | |
| Alternate Flow *C* : *Subscribing to only Trial features* | |
| This alternate flow is applicable only in case all items in the user's shopping cart are of type 'Trial'. | |
| C.1.1 The user clicks on Checkout button. | |
| C.1.2 The System stores the subscription cart items in the system database and generates the subscription key(s) for each of the selected items. | |
| C.1.3 The System sends the subscription key(s) to the user by email and returns a "success" message to the application for display to the user's browser. | |
| C.1.4 The use case ends successfully | |
| Alternate Flow D: *The user clicks on 'Proceed to Checkout' button.* | |
| D.1.1 The system redirects to the Payment gateway to process the payment. | |
| D.1.2 See use case 'Proceed to Payment' for details (not shown herein) | |
| D.1.3 This use case ends successfully. | |
| Alternate Flow E: Email cannot be sent to the user | |
| E.1.1 on successful checkout (with or without payment), the system generates subscription keys and invokes the thread for sending email i.e. asynchronously. | |
| E.1.2 The System does not need to inform the user of this condition, but this will be logged in the system log files and the status of the order [in the ORDER table] for this order is updated to "INCOMPLETE" with value "email pending". | |
| E.1.3 The System will asynchronously (for example. via batch processing) resend the email to the user. The batch process can be scheduled to run at a specified frequency (in hours). Default: 6hours | |
| E.1.4 The use case ends | |

| **Exceptional Flows** | |
|---|---|
| Exception Flow E1 : Payment Gateway is not available | |
| E1.1.1: In alternate flow D *'The user clicks on 'Proceed to Checkout' button, if the system is unable to redirect to the payment gateway for payment processing, thus* System displays the error message - "The payment gateway is not available. Please try again later". | |
| E1.1.2: The system displays the message on the 'View Cart' page in the browser. | |
| E1.1.3: The use case resumes at step 5. | |

The use case documentation provided in **Table 2.1** is in a semi structured format and follows a user-defined indexing scheme illustrated in the naming of the steps of the main flow, alternate flow and exception flow. The user-defined convention is typically the result of convenience (style adopted by the user, based on convenience) and not always intuitive to other users of the use case. Further, updating and/or modifying such a use case requires longer time intervals due to the presence of user-defined indexing scheme, which delays the execution of the subsequent steps of the Software Development Life Cycle (SDLC) when the use case is used as the basis for deriving test scenarios and test cases by the Test Designer(s).

**Table 2.1** exemplifies a use case having a simpler format/structure which could be created using common document editing softwares such as Microsoft Word Document editor. The aforementioned use case in spite of having a structure lacks clarity, is difficult to understand, and lacks consistent indexing and annotations. The system envisaged by the present invention includes an editing means **12** which organizes the steps in the use case in accordance with the pre-determined structural format in order to establish a semantic correlation between the steps of the use case. The use cases are thus now available as structured use cases, according to the pre-determined structure comprising main flows, alternate flows and exception flows Additionally, the use cases in this structured form are indexed using the indexing means **14**. **Table 2.2** exemplifies the use case whose steps have been organized in accordance with the pre-determined structure and indexed to establish the semantic correlation between the steps of the use case.

**Table 2.2: Indexed and Formatted Use case.**

| **Actors** | |
|---|---|
| Online Shopper (Customer) | |
| Online Shopping web application (i.e. the system) | |

| **Preconditions** | |
|---|---|
| The shopper is authorized and logged-in to the system | |
| The shopper has selected available items/products from the listing (catalogue) and added these items to the shopping cart/basket and before proceeding to checkout, clicks the 'View Cart' menu option to review selected items. | |

| ***Explanatory note:*** | |
|---|---|
| Some items may be available for "Try before Buy" i.e. trial or evaluation items, which may be priced at zero units of currency. A user may choose a combination of trial and non-trial (that is, paid) items. | |

| **Main Flow** | |
|---|---|
| **1.** The View Cart screen is displayed in the user's browser windows, populated based on the selection of feature details. | |
| The Fields are: | |
| a. | Feature Name |
| b. | Subscription Type |
| c. | Unit Period |
| d. | Quantity (No. of Copies) |
| e. | Price |
| **2.** If all trial feature details are selected (Total Cost = 0) then Checkout button will | |
| appear. | |
| Else if (Total Cost > 0) Proceed to Checkout button will appear. | |
| **3.** The screen will provide the following options to for the selected items in the cart: | |
| a. | update the quantity (quantity > 0) |
| b. | remove an item from the cart |
| **4.** The user reviews the list of selected items in the shopping cart. | |
| **5.** If satisfied, the user clicks on the 'Checkout' or 'Proceed to Checkout' button to process to checkout. Else, the user may update an item, remove an item or return to select more items (Note: see alternate flows below for details) | |
| **6.** The System generates the subscription key. | |
| *Explanatory note:* | |
| A subscription key is a key to unlock certain items for use by the shopper, and is generated by the system, once all parts of the purchasing transaction are validated and authorized. | |
| **7.** If checkout for trial items is successfully complete, system displays a confirmation message ("Thank you for your subscription... "). | |
| The use case ends successfully. | |
| **8.** If checkout includes all paid, or a mix of trial and paid items, system displays a message ("You are being re-directed to the payment gateway to complete the payment for your transaction... "). | |
| The use case continues at the "Proceed to Payment" use case (not shown herein) | |

| **Alternative Flows** | |
|---|---|
| **Alternate Flow A:** Updating Particular subscription item | |
| 5.1.a: [At step 5 of the main flow,] the user has chosen to update the item quantity for an item in the shopping cart. | |
| The user selects the new quantity corresponding to the subscription item. | |
| 5.1.b: The user clicks on Update button then the System saves the new quantity corresponding to item in the subscription cart. | |
| 5.1.c: The updated details appear on the View Cart screen. | |
| 5.1.d: The System re-calculates the total cost. | |
| 5.1.e: The use case resumes from step 5. | |

| **Alternate Flow B** : *Removing the particular subscription item* | |
|---|---|
| 5.2.a: [At step 5 of the main flow,] the user clicks on the Remove button corresponding the subscription item | |
| 5.2.b: The system removes the subscription item from the user's cart. | |
| 5.2.c: Removed item is no longer displayed on the View Cart screen. | |
| 5.2.d: The System re-calculates the total cost. | |
| 5.2.e: The use case resumes from step 5. | |

| **Alternate Flow C :** *Subscribing to only Triad features* | |
|---|---|
| This alternate flow is applicable only in case all items in the user's shopping cart are of type 'Trial'. [At step 5 of the main flow, if the user clicks on 'Checkout] | |
| 5.3.a: The user clicks on Checkout button. | |
| 5.3.b: The System stores the subscription cart items in the system database and generates the subscription key(s) for each of the selected items. | |
| 5.3.c: The System sends the subscription key(s) to the user by email and returns a "success" message to the application for display to the user's browser. | |
| 5.3.d: The use case ends successfully | |
| **STOP** | |

| **Alternate Flow D**: The user clicks on 'Proceed to Checkout' button. | |
|---|---|
| 5.4.a: [At step 5 of the main flow,] The system redirects to the Payment gateway to process the payment. | |
| 5.4.b: See use case 'Proceed to Payment' for details (not shown herein). | |
| 5.4.c: This use case ends successfully. | |
| **STOP** | |

| **Alternate Flow E**: Email cannot be sent to the user | |
|---|---|
| 6.1.a: [At step 6 of the main flow,] on successful checkout (with or without payment), the system generates subscription keys and invokes the thread for sending email i.e. asynchronously. | |
| 6.1.b: The System does not need to inform the user of this condition, but this will be logged in the system log files and the status of the order [in the ORDER table] for this order is updated to "INCOMPLETE" with value "email pending". | |
| 6.1.c: The System will asynchronously (for example, via batch processing) resend the email to the user. The batch process can be scheduled to run at a specified frequency (in hours). Default: 6hours | |
| 6.1.d: This use case ends. | |
| **STOP** | |

| **Exceptional Flow** | |
|---|---|
| | |
| Exception Flow E1 : Payment Gateway is not available | |
| 5.4.1.a: In alternate flow D *'The user clicks on 'Proceed to Checkout' button, if the system is unable to redirect to the payment gateway for payment processing, thus* System displays the error message - "The payment gateway is not available. Please try again later". | |
| 5.4.1.b: The system displays the message on the 'View Cart' page in the browser. | |
| 5.4.1.c: This use case resumes at step 5. | |

**Table 2.2** illustrates a structured and indexed use case. The above mentioned indexed use case clearly describes various aspects of the use case document such as the main flow, alternate flow and exception flow amongst others. Moreover, the use case shown in **Table 2.2** also consists of appropriately indexed items which bring clarity and understandability to the use case. As shown in **table 2.2**, various process steps depicted in the use case have been appropriately indexed using a number series, and the use case has been structured to enhance the readability and comprehensive, as per the pre-determined structure. Further, certain steps in the use case flows have been annotated by keywords like "STOP" to enhance the clarity of the requirements for the expected system's behavior. Such behavior is the subject of the test design that aims to ensure correctness under the stated conditions and scenarios.

In accordance with the present invention, the indexed and optionally annotated use case, as exemplified in **Table 2.2** is provided as input to the identification means **20**. The identification means **20** is adapted to identify the set of all possible sequence of traversals corresponding to the indexed and annotated use cases. The sequence identified by the identification means **20** includes at least one main flow, corresponding alternative flow and corresponding exceptional flow. However, it is possible in some cases that the exceptional cases may not be present.

The identification means **20** begins traversing the use case typically from the start point defined by the use case. Normally, the sequence of traversal is initiated with the traversal of the indexed steps corresponding to the main flow of the use case, and as per **Table 2.2**, the traversal of the use case begins with the traversal of **Main Flow** which begins with the step of displaying the view cart screen in the user's browser windows. Subsequently, all the steps included in the main flow will be traversed by the identification means **20**. Subsequent traversals of the use case are based on the presence of the corresponding alternative flow steps and exceptional flow steps. If the use case includes any alternative flows corresponding to the main flow, then subsequent to the traversal of the steps of the main flow, the steps corresponding to the alternative flow will be traversed. In case of **Table 2.2**, the described use case includes five **alternative flows**. Therefore, subsequent to the traversal of the main flow, the steps corresponding to the aforementioned alternative flows would be traversed along with the steps of the main flow to arrive at a candidate test scenario comprising the main flow and the corresponding alternative flows.

For example, a use case with main flow and alternative flows could be traversed in such a manner that the corresponding candidate test scenario includes the following sets of steps:
Set 1: {1,2,3,4,5,6,7,8-END}, wherein steps 1,2,3,4,... 8 correspond to the steps in the main flow (this sequence represents the normal flow); and
{1,2,3,4,5.1.a, 5.1.b, 5.1.c, 5.1.d, 5.1.e-STOP}, wherein steps 1,2,3 and 4 correspond to the steps in the main flow and step 5.1.x corresponds to the alternative flow (this sequence represents the combination of normal flow and corresponding alternative flow).

For example, another candidate test scenario could include the following set of steps:
Set 2: {1,2,3,4,5,6,7,8-END}, wherein steps 1,2, 3,4,5,6,7, and 8 correspond to the steps in the main flow; and
{1,2,3,4,5.2.a, 5.2.b, 5.2.c, 5.2.d, 5.2.e, 6, 7, 8.. -END}, wherein steps 1,2,3,4,6,7 and 8 correspond to the steps in the main flow and steps 5.2.x corresponds to the alternative flow;

In accordance with this invention, set 1 and set 2 correspond to the possible candidate test scenarios generated by traversing the main flow and corresponding alternative flows. It is to be noted that for the sake of explanation only two sets of identified test scenarios are illustrated here. However, for the aforementioned exemplary use case, the number of test scenarios that can be identified will be up to '11', and all the possible test scenarios have not been explained for the sake of brevity.

Further, the test scenarios thus identified can be easily verified and validated by the test designer, to ensure a valid scenario. For example, if a test scenario was identified as having the steps {1,2,3,4,S.4.a,5.4.b,5.4.c,6,7,8-END} instead of the purported set {1,2,3,4,5.4.a,5.4.b,5.4.c-STOP}, then such an event can be noted as an error or as an invalid test scenario in the input case. Identifying such inconsistencies/errors early in the software development lifecycle is a tremendous advantage and can lead to benefits in terms of time and effort saved.

Subsequent to the traversal of the main flow and alternative flows, if it is determined by the identification means **20** that exceptional flows corresponding to one or more steps of the main flow are included in the use case, then the step(s) corresponding to the exceptional flows would be traversed. In case of the use case depicted in **Table 2.2** one **exceptional flow (E1)** has been provided. Therefore, the steps corresponding to the sole exceptional flow would be traversed by the identification means **20** subsequent to the traversal of the main flow and the alternative flows.

In accordance with the present invention, the sequence of execution of steps of the use case are determined based on the index associated with the respective steps. For example, in Table 2.2, the 5^{th} step of the main flow reads "if satisfied, the user clicks on the 'Checkout' or 'Proceed to Checkout' button to process to checkout. Else, the user may update an item, remove an item or return to select more items." Now the steps of the alternative flow corresponding to the 5^{th} step of the main flow are identified as alternative flow A (having steps indexed as 5.1.a to 5.1.e), alternative flow B (having steps indexed as 5.2.a to 5.2.e), alternative flow C (having steps indexed as 5.3.a to 5.3.d) and alternative flow D (having steps indexed as 5.4.a to 5.4.c). Such an identification of the alternative steps corresponding to a particular main step is performed by the identification means based on the index associated with the steps of the alternative flow. Subsequently, the steps of the exceptional flow E1 have been indexed as 5.4.1.a to 5.4.1.c, since those steps correspond to the 5^{th} step of the main flow and fourth alternative flow (alternative flow:D). Therefore the steps have been indexed starting from 5.4.1.a with '5' representing the corresponding main flow step, '4' representing the corresponding alternative flow, and '1.a' representing the first step of the exceptional flow.

In accordance with the present invention, since steps of alternative flows A, B, C and D and exceptional flow E1 have been indexed beginning with the numerical 5 (in the format 5.x.x), the identification means **20** identifies that these steps correspond to the 5^{th} step of the main flow. Subsequently, the steps identified by the identification means **20** will be arranged in terms of a sequence (sequence involving a particular step of the main flow , all the steps of the alternative flows which have identified as related to the particular steps of the main flow and all the steps of the exceptional flows which have been identified as related to the particular step of main flow) so as to represent a meaningful flow.

In the aforementioned manner, the identification means **20** identifies all the possible sequences in which the steps associated with the use case can be executed. The means **22** which is adapted to generate test scenarios having indexed and optionally annotated steps cooperates with identification means **20** and generates test scenarios having indexed steps arranged according to the sequence identified by the identification means **20.** The means **22** acts as a consistent and reliable means for identifying and generating the possible test scenarios from the use case. The test scenarios thus identified are available to the test designer/analyst to proceed with the next stage of test designing, and may be exported into a convenient format such as Microsoft Excel spreadsheet.

### TECHNICAL ADVANTAGES

By use of the system and method envisaged by the present invention, a comprehensive set of test scenarios i.e. combinations of path traversals in a use case comprising main flows, alternate flows and exception flows can be generated. The invention enables the creation of test scenarios having structured, indexed use cases in an extremely rapid manner, and in a repeatable and consistent fashion. This ensures maximum coverage of the use case paths, and increases the overall efficiency of operation of the Test Designer, in the test design phase. The focus of the Test Designer now shifts to selecting the applicable test scenarios - based on a prioritization - for inclusion in the scope of the overall testing cycle. The validation of the created test scenarios is also easier and quicker since it is easy for the reviewers to confirm the need for considering an identified test scenario for the purpose of software testing. The system of the present invention also depicts the structured and indexed use case in a lucid form that a novice user can also easily understand. Thus, the overall efficiency of the process of understanding the complex use case, comprising multiple alternate and exception flows and deriving the optimal set of test scenarios there from is increased significantly.

In at least one of the embodiments, the system envisaged by the present invention:
- enables storing of generated test scenarios in a repository;
- handles more complex use case constructs, such as use cases with alternate-flows for alternate flows, exception flows for alternate flows, and the like;
- provides means for facilitating concurrent indexing and organization of steps while editing the use case;
- provides means which suggests the type of the flow (i.e., the main flow, alternate flow or exception flow) being edited; and
- provides means to additionally identify parameters such as input/output values, expected results, etc. for test cases corresponding to the identified test scenarios.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results.

Any discussion of documents, acts, materials, devices, articles or the like that has been included in this specification is solely for the purpose of providing a context for the invention. It is not to be taken as an admission that any or all of these matters form part of the prior art base or were common general knowledge in the field relevant to the invention as it existed anywhere before the priority date of this application.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

While considerable emphasis has been placed herein on the particular features of this invention, it will be appreciated that various modifications can be made, and that many changes can be made in the preferred embodiment without departing from the principles of the invention. These and other modifications in the nature of the invention or the preferred embodiments will be apparent to those skilled in the art from the disclosure herein, whereby it is to be distinctly understood that the foregoing descriptive matter is to be interpreted merely as illustrative of the invention and not as a limitation.

## Claims

1. A computer implemented system for indexing and optionally annotating steps associated with use cases and generating test scenarios therefrom, said system comprising:
• a pre-determined structural format;
• editing means adapted to organize the steps associated with said use cases according to the pre-determined structural format only in the event that said steps do not adhere to the pre-determined structural format;
• indexing means adapted to index the steps that adhere to the pre-determined structural format and the steps organized according to said pre-determined format;
• annotating means adapted to optionally annotate the indexed steps in each of said use cases by inserting appropriate keywords into at least one of said indexed steps;
• generating means adapted to receive use cases having indexed steps, said generating means comprising:
o extraction means adapted to extract said indexed steps from said use cases;
o identification means adapted to identify at least one sequence in which said indexed steps can be traversed, wherein said sequence includes at least one flow selected from the group of flows consisting of main flow, alternative flow and exceptional flow;
o means adapted to generate at least one test scenario having said indexed steps arranged according to the sequence identified by said identification means, said means further adapted to optionally filter generated test scenarios based on a pre-determined filtering criterion; and
o comparator means adapted to compare generated test scenarios based on the sequence of the corresponding indexed steps, said comparator means further adapted to eliminate the test scenario having a sequence identical to that of another generated test

2. The system as claimed in claim 1 wherein said system further includes exporting means adapted to export at least the generated test scenarios including filtered test scenarios into a test environment.

3. A computer implemented method for indexing and optionally annotating steps associated with use cases and generating test scenarios therefrom, said method comprising the following steps:
• re-arranging the steps associated with said use cases according to a pre-determined structural format only in the event that said steps do not adhere to said pre-determined structural format;
• indexing the steps that adhere to said pre-determined structural format and the steps re-arranged according to said pre-determined structural format;
• optionally annotating the indexed steps in each of said use cases by inserting appropriate keywords into at least one of the said indexed steps;
• receiving the use cases having indexed steps and extracting said indexed steps from said use cases;
• identifying at least one sequence in which said indexed steps can be traversed;
• generating at least one test scenario having said indexed steps arranged according to identified sequence;
• optionally filtering generated test scenarios based on a pre-determined filtering criterion; and
• comparing generated test scenarios based on the sequence of corresponding indexed steps and eliminating the test scenario having a sequence identical to that of another generated test scenario.

4. The method as claimed in claim 3, wherein the step of identifying at least one sequence further includes the step of identifying a sequence having at least one flow selected from the group of flows consisting of main flow, alternative flow and exceptional flow.

5. The method as claimed in claim 3, wherein said method further includes the step of exporting at least the generated test scenarios including filtered test scenarios into a test environment.
